# EUROPEAN PATENT APPLICATION

(11) **EP 4 527 582 A1**
(43) Date of publication of application: **26.03.2025**
(21) Application number: 24202280.4
(22) Date of filing: 24.09.2024
(51) Int. Cl.: B29B 7/74, B29B 7/90, B29B 9/12, C08K 3/04

(54) **MASTERBATCH PRODUCTION SYSTEM AND METHOD**

(30) Priority: 25.09.2023 US 202363585072 P; 27.06.2024 US 202418756498
(71) Applicant: The Goodyear Tire & Rubber Company, Akron, OH 44316 (US)
(72) Inventor: KERNS, Michael Lester, Medina, 44256 (US); MA, Liqing, Uniontown, Ohio, 44685 (US)
(74) Representative: Kutsch, Bernd

(57) **Abstract**

A system for producing a masterbatch is disclosed, the system comprising: a coagulation chamber (5) comprising a first inlet and a second inlet; an elastomeric latex source in fluid communication with the first inlet; a sonication chamber (4) in direct fluid communication with the second inlet and/or a sonication device for facilitating ultrasonic mixing within the coagulation chamber (5); and a particulate slurry source configured to provide a particulate slurry to the sonication chamber (4). Also, a method for producing an elastomeric composite blend is disclosed. The method comprises feeding a first composition comprising an elastomeric latex to a coagulation chamber (5) and feeding a second composition comprising a particulate filler to the coagulation chamber (5), wherein the first composition and the second composition are mixed in the coagulation chamber (5) to form a masterbatch. Afterwards, the method comprises dry mixing the masterbatch with an additional elastomer to form the elastomer composite blend. The second composition is fed to the coagulation chamber (5) from a sonication chamber (4) and/or an ultrasonic generator facilitates ultrasonic mixing in the coagulation chamber (5).

## Description

### BACKGROUND

When producing certain masterbatches (e.g., carbon black/natural rubber masterbatches), it is a challenge to break up particulate filler agglomerates and maintain filler dispersion prior to mixing with the elastomeric latex. For example, due to its hydrophobic nature, carbon black tends to agglomerate in aqueous media.

It would be desirable to develop new systems and methods for maintaining desired particulate filler morphology and size distribution prior to injecting the particulate filler into a coagulation chamber.

### SUMMARY OF THE INVENTION

The invention relates to a system in accordance with claim 1 and to a method in accordance with claim 5 or 10, respectively.

Dependent claims refer to preferred embodiments of the invention.

Disclosed, in some preferred embodiments, is a system for producing a masterbatch. The system includes a coagulation chamber having a first inlet and a second inlet; an elastomeric latex source in fluid communication with the first inlet; a sonication chamber in direct fluid communication with the second inlet; and a particulate slurry source configured to provide a particulate slurry to the sonication chamber.

The particulate slurry source may be a carbon black slurry tank.

In some preferred embodiments, the system further includes a high shear mixer between the carbon black slurry tank and the sonication chamber.

The system may further include a pump (e.g., a positive displacement pump) between the carbon black slurry tank and the sonication chamber.

Disclosed, in other preferred embodiments, is a method for producing a masterbatch. The method includes: feeding (e.g., continuously feeding) a first composition containing an elastomeric latex to a coagulation chamber; and feeding (e.g., continuously feeding) a second composition containing a particulate filler from a sonication chamber to the coagulation chamber. The first composition and the second composition are mixed in the coagulation chamber to form the masterbatch.

In some preferred embodiments, the particulate filler includes carbon black.

The elastomeric latex may include natural rubber.

In some preferred embodiments, the second composition is fed to the coagulation chamber at a pressure of at least 2068 kPa (e.g., from 3447 kPa to 34474 kPa).

The second composition may be fed to the coagulation chamber at a velocity of at least 30.48 meter per second (e.g., 30.48 meter per second to 244 meter per second).

Disclosed, in further embodiments, is a method for producing an elastomeric composite blend. The method includes: feeding a first composition containing an elastomeric latex to a coagulation chamber; and feeding a second composition containing a particulate filler from a sonication chamber to the coagulation chamber. The first composition and the second composition are mixed in the coagulation chamber to form the masterbatch. The method further includes dry mixing the masterbatch with an additional elastomer to form the elastomer composite blend.

In some embodiments, the additional elastomer includes natural rubber, chlorinated natural rubber, or a homopolymer, copolymer or terpolymer of one or more of 1,3-butadiene, styrene, isoprene, isobutylene, 2,3-dimethyl-1,3-butadiene, acrylonitrile, ethylene, and/or propylene.

The elastomeric blend may contain from 30 to 85 phr of the particulate filler.

Disclosed, in further embodiments, are masterbatches and elastomeric composite blends prepared by the methods.

These and other aspects and/or objects of the disclosure are more particularly described below.

### BRIEF DESCRIPTION OF THE DRAWINGS

The following is a brief description of the drawings, which are presented for the purposes of illustrating the exemplary embodiments disclosed herein.

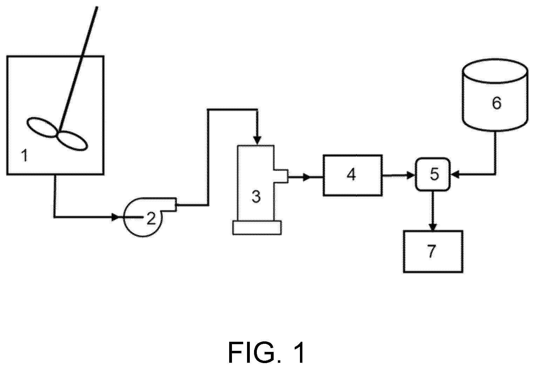

FIG. 1 is a schematic flow chart illustration of a system and method for preparing an elastomer masterbatch in accordance with some embodiments of the present disclosure.

### DETAILED DESCRIPTION OF PREFERRED EMBODIMENTS OF THE INVENTION

The present disclosure may be understood more readily by reference to the following detailed description of desired embodiments included therein and the drawings. In the following specification and the claims which follow, reference will be made to a number of terms which shall be defined to have the following meanings.

Unless otherwise defined, all technical and scientific terms used herein have the same meaning as commonly understood by one of ordinary skill in the art. In case of conflict, the present document, including definitions, will control.

As used in the specification and in the claims, the term "comprising" may include the embodiments "consisting of" and "consisting essentially of." The terms "comprise(s)," "include(s)," "having," "has," "can," "contain(s)," and variants thereof, as used herein, are intended to be open-ended transitional phrases that require the presence of the named ingredients/steps and permit the presence of other ingredients/steps. However, such description should be construed as also describing compositions, mixtures, or processes as "consisting of" and "consisting essentially of" the enumerated ingredients/steps, which allows the presence of only the named ingredients/steps, along with any impurities that might result therefrom, and excludes other ingredients/steps.

All ranges disclosed herein are inclusive of the recited endpoint and independently combinable (for example, the range of "from 2 to 10" is inclusive of the endpoints, 2 and 10, and all the intermediate values).

For the recitation of numeric ranges herein, each intervening number there between with the same degree of precision is explicitly contemplated. For example, for the range of 6-9, the numbers 7 and 8 are contemplated in addition to 6 and 9, and for the range 6.0-7.0, the number 6.0, 6.1, 6.2, 6.3, 6.4, 6.5, 6.6, 6.7, 6.8, 6.9, and 7.0 are explicitly contemplated.

The present disclosure relates to a masterbatch produced by mixing an elastomeric latex (e.g., a natural rubber-containing latex) with a slurry containing filler particles (e.g., carbon black particles). The slurry and latex are provided to a coagulation chamber and the slurry may be provided at a much higher velocity than the latex to facilitate high velocity collisions between filler particles and rubber particles. Immediately prior to the coagulation chamber, a sonication chamber is utilized to break up particulate filler agglomerates and/or maintain their dispersion prior to mixing with the latex in the coagulation chamber. By including the sonication chamber, particulate filler primary particles will not have time to form aggregates/agglomerates prior to being locked into the coagulated rubber matrix and desired particulate filler morphology and size distribution can be achieved in the slurry fed to the coagulation chamber.

In some embodiments, the sonication device is a continuous tube sono-reactor. The sonication device may include a dedicated ultrasonic generator.

Sonication conditions can be controlled by a dedicated ultrasonic generator. Depending on the design of the ultrasonic generator, it can be operated at a singular power and a singular frequency. In some embodiments, the ultrasonic generator is capable of generating wideband ultrasonic energy and can be operated under multifrequency mode, e.g., from infrasonic up to the MHz domain .

In the embodiment depicted in FIG. 1, a tank 1 receives a particulate filler and a carrier fluid (e.g., water). The tank may be a continuously stirred tank. The particulate filler slurry from the tank 1 may be provided to a mixer 3 (e.g., a high shear mixer) prior to being provided to a sonication chamber 4. In some embodiments, a pump 2 (e.g., a positive displacement pump) is utilized to facilitate provision of the particulate filler slurry from the tank 1 downstream. The sonication chamber 4 prevents the re-agglomeration of particulate filler particles prior to injection into the coagulation chamber 5. In the coagulation chamber 5, the particulate slurry is typically provided at a higher velocity and/or pressure than the elastomeric latex from a supply tank 6. The coagulated masterbatch from the coagulation chamber 5 may be provided to a subsequent material finishing process 7.

Although the depicted embodiment illustrates a sonication chamber upstream of a coagulation chamber, it should be understood that the inclusion of a sonication device to facilitate ultrasonic mixing within the coagulation chamber is also contemplated either as an alternative to the sonication chamber or in addition to the sonication chamber.

In some embodiments, the coagulation chamber is built in or as part of the sonication chamber. In other embodiments, the coagulation chamber itself is a sonication chamber.

It should be understood that the phrase "a sonication chamber in direct fluid communication with the second inlet and/or a sonication device for facilitating ultrasonic mixing within the coagulation chamber" encompasses embodiments with only the sonication chamber in direct fluid communication with the second inlet, only the sonication device for facilitating ultrasonic mixing within the coagulation chamber, and both the sonication chamber in direct fluid communication with the second inlet and the sonication device for facilitating ultrasonic mixing within the coagulation chamber.

The slurry may be used in masterbatch production immediately upon being prepared. Fluid conduits carrying the slurry and any optional holding tanks and the like, should establish or maintain conditions which substantially preserve the dispersion of the carbon black in the slurry. That is, substantial reagglomeration or settling out of the particulate filler in the slurry should be prevented or reduced to the extent reasonably practical. In some embodiments, all flow lines are smooth, with smooth line-to-line interconnections.

Means may also be provided for incorporating various additives into the elastomer masterbatch. An additive fluid comprising one or more additives may be fed to the mixing zone as a separate feed stream. One or more additives may also be pre-mixed, if suitable, with the carbon black slurry or, more typically, with the elastomer latex fluid. Additives may be mixed into the masterbatch subsequently, i.e., during a subsequent dry mixing step. Numerous additives are well known to those skilled in the art and include, for example, antioxidants, antiozonants, plasticizers, processing aids (e.g., liquid polymers, oils, and the like), resins, flame-retardants, extender oils, lubricants, and a mixture of any of two or more thereof. The general use and selection of such additives is well known to those skilled in the art. Their use in the system disclosed here will be readily understood with the benefit of the present disclosure. In accordance with certain alternative embodiments, curative may be incorporated in a similar manner, to produce a curable elastomer composite which may be referred to as a curable base compound.

The carbon black slurry or other particulate filler fluid may be supplied to the coagulant chamber at a pressure above 690 kPa, such as 2069 kPa to 20684 kPa, e.g., 4826 kPa. In some embodiments, the liquid slurry is fed into the mixing zone at a velocity above 30.48 meter per second, e.g., 30.48 meter per second to 244 meter per second, or 61 meter per second to 152.4 meter per second.

The masterbatch produced using the system and method of the present disclosure may be used to produce elastomer composite blends. The process for producing such blends may include mixing (i) elastomer masterbatch produced in a continuous flow process involving mixture of elastomer latex and particulate filler fluids at turbulence levels and flow control conditions sufficient to achieve coagulation even without use of traditional coagulating agents, and (ii) additional elastomer added to such elastomer masterbatch in a dry mixing step. Some optional aspects are disclosed in U.S. Pat. No. 6,075,084.

The processes for producing elastomer composite blends advantageously afford flexibility to allow for better control distribution of filler between two different elastomer phases in an elastomer composite blend as seen in the example of an elastomer composite blend containing natural rubber, butadiene rubber ("BR") and carbon black filler. For certain applications, it is beneficial to have the carbon black filler primarily in the natural rubber phase of the elastomer composite blend. In accordance with prior known dry/dry mixing techniques, the carbon black can be mixed with the natural rubber using a dry mixing technique, followed by the addition and further dry mixing of BR. A disadvantageously large portion of the carbon black will migrate into the BR phase, due to its affinity for the BR phase and the less than desirable macro-dispersion of the carbon black in the natural rubber phase. In comparison, improved performance properties of comparable elastomer composite blends prepared by the wet/dry mixing method disclosed herein indicate that more of the carbon black is retained in the natural rubber phase when the carbon black is mixed with the natural rubber in the initial wet mixing step, followed by the addition of BR in a subsequent dry mixing step.

In accordance with the wet mixing step of the method disclosed here, feed rates of latex fluid and particulate filler fluid to the mixing zone of a coagulum reactor can be precisely metered to achieve high yield rates, with little free latex and little undispersed filler in the product crumb at the discharge end of the coagulum reactor. Without wishing to be bound by theory, it presently is understood that a quasi-mono-phase system is established in the mixing zone except that coagulum solids are being formed there and/or downstream thereof in the coagulum zone. Extremely high feed velocity of the particulate filler fluid into the mixing zone of the coagulum reactor and velocity differential relative the latex fluid feed are believed to be significant in achieving sufficient turbulence, i.e., sufficiently energetic shear of the latex by the impact of the particulate filler fluid jet for thorough mixing and dispersion of the particulate into the latex fluid and coagulation. High mixing energies yield product masterbatch crumb with excellent dispersion, together with controlled product delivery. The coagulum is created and then formed into a desirable extrudate. The particulate filler fluid and elastomer latex may be fed continuously, meaning that an ongoing flow of coagulated masterbatch is established from the mixing zone to the discharged end of the coagulum reactor while an uninterrupted flow of the feed fluids is maintained. Typically, the uninterrupted flow of the feed fluids and simultaneous discharge of coagulated masterbatch are maintained for one or more hours, e.g., more than 24 hours, and ever perhaps for a week or more.

While various embodiments can employ a variety of different fillers and elastomers, certain portions of the description of method and apparatus aspects of the disclosure will, for convenience, describe a masterbatch comprising natural rubber and carbon black. It will be within the ability of those skilled in the art, given the benefit of this disclosure, to employ the method and apparatus disclosed here in accordance with the principles of operation discussed here to produce masterbatch and elastomer composite blends comprising a number of alternative or additional elastomers, fillers, and other materials. In brief, methods for preparing elastomer masterbatch involve feeding simultaneously (a) a slurry of carbon black or other filler; and (b) a natural rubber latex fluid or other suitable elastomer fluid to a mixing zone of a coagulum reactor. A coagulum zone extends from the mixing zone, and may be of progressively increasing in cross-sectional area in the downstream direction from an entry end to a discharge end. The slurry may be fed to the mixing zone as a continuous, high velocity jet of injected fluid, while the natural rubber latex fluid is fed at relatively low velocity. The high velocity, flow rate and particulate concentration of the filler slurry are sufficient to cause mixture and high shear of the latex fluid, flow turbulence of the mixture within at least an upstream portion of the coagulum zone, and substantially completely coagulate the elastomer latex prior to the discharge end. Substantially complete coagulation can thus be achieved. The continuous flow method of producing the elastomer composites comprises the continuous and simultaneous feeding of the latex fluid and filler slurry to the mixing zone of the coagulum reactor, establishing a continuous, semi-confined flow of a mixture of the latex and filler slurry in the coagulum zone. Elastomer composite crumb in the form of "worms" or globules are discharged from the discharge end of the coagulum reactor as a substantially constant flow concurrently with the on-going feeding of the latex and carbon black slurry streams into the mixing zone of the coagulum reactor. Notably, the plug-type flow and atmospheric or near atmospheric pressure conditions at the discharge end of the coagulum reactor are highly advantageous in facilitating control and collection of the elastomer composite product, such as for immediate or subsequent further processing steps. Feed rates of the natural rubber latex fluid and carbon black slurry to the mixing zone of the coagulum reactor can be precisely metered to achieve high yield rates, with little free latex and little undispersed carbon black in the product crumb at the discharge end of the coagulum reactor. Without wishing to be bound by theory, it is believed that a quasi-mono-phase system is established in the mixing zone except that coagulum solids are being formed there and/or downstream thereof in the coagulum zone. Extremely high feed velocity of the carbon black slurry into the mixing zone of the coagulum reactor and velocity differential relative the natural rubber latex fluid feed are believed to be significant in achieving sufficient turbulence, i.e., sufficiently energetic shear of the latex by the impact of the particulate filler fluid jet for thorough mixing and dispersion of the particulate into the latex fluid and coagulation. High mixing energies yield the novel product with excellent macro-dispersion, together with controlled product delivery. The coagulum is created and then formed into a desirable extrudate.

The masterbatch prepared by the above-described wet mixing technique and apparatus may be formed into an elastomer composite blend by subsequent dry mixing with additional elastomer. Thus, in some embodiments, the present disclosure involves a wet/dry method. The dry mixing step of the wet/dry mixing method can be carried out with commercially available apparatus and techniques including, for example, Banbury mixers and the like. The additional elastomer added during the dry mixing step of the wet/dry mixing method disclosed here can be one or more elastomers which are the same as or different from the elastomer(s) employed to form the masterbatch. Other ingredients also may be added along with the additional elastomer during the dry mix step including, for example, extender oil, additional particulate filler, curatives, etc., in those embodiments wherein additional particulate filler is added during the dry mixing step such additional filler can be the same as or different from the filler(s) used in the masterbatch formed by the wet mixing step.

Suitable elastomer latex fluids include both natural and synthetic elastomer latices and latex blends. The latex is suitable for coagulation by the selected particulate filler and is suitable for the intended purpose or application of the final rubber product. It will be within the ability of those skilled in the art to select suitable elastomer latex or a suitable blend of elastomer latices for use in the methods and apparatus disclosed here, given the benefit of this disclosure. Exemplary elastomers include, but are not limited to, rubbers, polymers (e.g., homopolymers, copolymers and/or terpolymers) of 1,3-butadiene, styrene, isoprene, isobutylene, 2,3-dimethyl-1,3-butadiene, acrylonitrile, ethylene, and/or propylene and the like. The elastomer may have a glass transition temperature (T_{g}) as measured by differential scanning calorimetry (DSC) ranging from - 120°C to 0°C. Examples include, but are not limited to, styrene-butadiene rubber (SBR), natural rubber and its derivatives such as chlorinated rubber, polybutadiene, polyisoprene, poly(styrene-co-butadiene), and the oil extended derivatives of any of them. Blends of any of the foregoing may also be used. The latex may be in an aqueous carrier liquid. Alternatively, the liquid carrier may be a hydrocarbon solvent. In any event, the elastomer latex fluid must be suitable for controlled continuous feed at appropriate velocity, pressure, and concentration into the mixing zone. Non-limiting examples of suitable synthetic rubbers include: copolymers of from 10 to 70 percent by weight of styrene and from 90 to 30 percent by weight of butadiene such as copolymer of 19 parts styrene and 81 parts butadiene, a copolymer of 30 parts styrene and 70 parts butadiene, a copolymer of 43 parts styrene and 57 parts butadiene and a copolymer of 50 parts styrene and 50 parts butadiene; polymers and copolymers of conjugated dienes such as polybutadiene, polyisoprene, polychloroprene, and the like, and copolymers of such conjugated dienes with an ethylenic group-containing monomer copolymerizable therewith such as styrene, methyl styrene, chlorostyrene, acrylonitrile, 2-vinyl-pyridine, 5-methyl-2-vinylpyridine, 5-ethyl-2-vinylpyridine, 2-methyl-5-vinylpyridine, alkylsubstituted acrylates, vinyl ketone, methyl isopropenyl ketone, methyl vinyl either, alphamethylene carboxylic acids and the esters and amides thereof such as acrylic acid and dialkylacrylic acid amide. Also suitable for use herein are copolymers of ethylene and other high alpha olefins such as propylene, butene-1, and pentene-1.

The additional elastomer added during the dry mixing step of the wet/dry mixing method can employ any elastomer or mixture of elastomers suitable to the intended use or application, including those listed above for use in the wet mixing step. In accordance with some embodiments, the elastomer latex employed in the wet mixing step is natural rubber latex and the additional elastomer employed in the dry mixing step is butadiene rubber (BR). In such embodiments, the butadiene rubber may form the minor phase or constituent of the elastomer composite blend, e.g., from 10% to 50% by weight of total elastomer in the elastomer composite blend. In accordance with certain other embodiments, the elastomer latex employed in the wet mixing step is natural rubber latex and the additional elastomer employed in the dry mixing step is styrene-butadiene rubber (SBR). In some embodiments, the SBR may form the major phase or constituent of the elastomer composite blend, e.g., from 50% to 90% by weight of total elastomer in the elastomer composite blend. In accordance with certain other embodiments, the additional elastomer is natural rubber. In accordance with certain other embodiments, the elastomer latex employed in the wet mixing step is butadiene rubber latex and the additional elastomer employed in the dry mixing step is SBR. In such embodiments, the SBR may be from 10% to 90% by weight of total elastomer in the elastomer composite blend. In accordance with certain other embodiments, the elastomer latex employed in the wet mixing step is butadiene rubber latex and the additional elastomer employed in the dry mixing step is natural rubber. In such embodiments, the natural rubber may be the minor constituent or phase of the elastomer composite blend, e.g., from 10% to 50% by weight of total elastomer in the elastomer composite blend. In accordance with certain other embodiments employing butadiene rubber latex in the wet mixing step, the additional elastomer is additional butadiene rubber. In accordance with certain other embodiments, the elastomer latex employed in the wet mixing step is SBR and the additional elastomer is butadiene rubber. In such embodiments, the butadiene rubber may be from 10% to 90% by weight of total elastomer in the elastomer composite blend. In accordance with certain other embodiments, the elastomer latex employed in the wet mixing step is SBR and the additional elastomer is natural rubber. In such embodiments, the natural rubber may be the major constituent or phase, e.g., from 50% to 90% by weight of total elastomer in the elastomer composite blend. In some embodiments, SBR is employed in both the wet mixing and dry mixing steps, thus being essentially 100% of the elastomer in the elastomer composite blend.

As noted further below, the rubber compositions can contain, in addition to the elastomer and filler, curing agents, a coupling agent, and optionally, various processing aids, oil extenders, and antidegradants. In that regard, it should be understood that the elastomer composite blends disclosed here include vulcanized compositions (VR), thermoplastic vulcanizates (TPV), thermoplastic elastomers (TPE), and thermoplastic polyolefins (TPO). TPV, TPE, and TPO materials are further classified by their ability to be extruded and molded several times without substantial loss of performance characteristics. Thus, in making the elastomer composite blends, one or more curing agents such as, for example, sulfur, sulfur donors, activators, accelerators, peroxides, and other systems used to effect vulcanization of the elastomer composition may be used.

Where the elastomer latex employed in the wet mixing step comprises natural rubber latex, the natural rubber latex can comprise field latex or latex concentrate (produced, for example, by evaporation, centrifugation, or creaming). The natural rubber latex must, of course, be suitable for coagulation by the carbon black. The latex is provided typically in an aqueous carrier liquid. Alternatively, the liquid carrier may be a hydrocarbon solvent. In any event, the natural rubber latex fluid must be suitable for controlled continuous feed at appropriate velocity, pressure, and concentration into the mixing zone. The well-known instability of natural rubber latex is advantageously accommodated, in that it is subjected to relatively low pressure and low shear throughout the system until it is entrained into the previously mentioned semi-confined turbulent flow upon encountering the extraordinarily high velocity and kinetic energy of the carbon black slurry in the mixing zone. In some embodiments, for example, the natural rubber is fed to the mixing zone at a pressure of 34.5 kPa, at a feed velocity in the range of 0.91 meter per second to 3.66 m per second, e.g., 1.22 to 1.83 meter per second. In some embodiments, the natural rubber latex is fed to the mixing zone at negative pressure, e.g., -34.5 kPa, where the vacuum is created by the educator effect from the high-speed carbon black jet stream. Selection of a suitable latex or blend of latices will be well within the ability of those skilled in the art given the benefit of the present disclosure and the knowledge of selection criteria generally well recognized in the industry.

The slurry may comprise any suitable filler in a suitable carrier fluid. Selection of the carrier fluid will depend largely upon the choice of particulate filler and upon system parameters. Both aqueous and non-aqueous liquids may be used, with water being useful in many embodiments in view of its cost, availability, and suitability of use in the production of carbon black and certain other filler slurries.

When a carbon black filler is used, selection of the carbon black will depend largely upon the intended use of the elastomer composite blend. Optionally, the slurry further includes any material which can be slurried and fed to the mixing zone in accordance with the principles disclosed here. Suitable additional particulate fillers include, for example, conductive fillers, reinforcing fillers, fillers comprising short fibers (typically having an LID aspect ratio less than 40), flakes, etc. Thus, exemplary particulate fillers which can be employed in producing elastomer masterbatch in accordance with the methods and apparatus disclosed here, are carbon black, fumed silica, precipitated silica, coated carbon black, chemically functionalized carbon blacks, such as those having attached organic groups, and silicon-treated carbon black, either alone or in combination with each other. Silicon-treated carbon black, a silicon containing species such as an oxide or carbide of silicon, is distributed through at least a portion of the carbon black aggregate as an intrinsic part of the carbon black. Conventional carbon blacks exist in the form of aggregates, with each aggregate consisting of a single phase, which is carbon. This phase may exist in the form of a graphitic crystallite and/or amorphous carbon and is usually a mixture of the two forms. As discussed elsewhere herein, carbon black aggregates may be modified by depositing silicon-containing species, such as silica, on at least a portion of the surface of the carbon black aggregates. The result may be described as silicon-coated carbon blacks. The materials described herein as silicon-treated carbon blacks are not carbon black aggregates which have been coated or otherwise modified, but actually represent a different kind of aggregate. In the silicon-treated carbon blacks, the aggregates contain two phases. One phase is carbon, which will still be present as graphitic crystallite and/or amorphous carbon, while the second phase is silica (and possibly other silicon-containing species). Thus, the silicon-containing species phase of the silicon-treated carbon black is an intrinsic part of the aggregate; it is distributed throughout at least a portion of the aggregate. It will be appreciated that the multiphase aggregates are quite different from the silica-coated carbon blacks mentioned above, which consist of pre-formed, single phase carbon black aggregates having silicon-containing species deposited on their surface. Such carbon blacks may be surface-treated in order to place a silica functionality on the surface of the carbon black aggregate. In this process, an existing aggregate is treated so as to deposit or coat silica (as well as possibly other silicon-containing species) on at least a portion of the surface of the aggregate. For example, an aqueous sodium silicate solution may be used to deposit amorphous silica on the surface of carbon black aggregates in an aqueous slurry at high pH, such as 6 or higher. More specifically, carbon black may be dispersed in water to obtain an aqueous slurry consisting, for example, of 5% by weight carbon black and 95% by weight water. The slurry may be heated to above 70°C, such as to 85-95°C, and the pH adjusted to above 6, such as to a range of 10-11, with an alkali solution. A separate preparation is made of sodium silicate solution, containing the amount of silica which is desired to be deposited on the carbon black, and an acid solution to bring the sodium silicate solution to a neutral ph. The sodium silicate and acid solutions are added dropwise to the slurry, which is maintained at its starting pH value with acid or alkali solution as appropriate. The temperature of the solution is also maintained. A suggested rate for addition of the sodium silicate solution is to calibrate the dropwise addition to add 3 weight percent silicic acid, with respect to the total amount of carbon black, per hour. The slurry could be stirred during the addition, and after its completion for from several minutes (such as 30) to a few hours (i.e., 2-3). In contrast, silicon-treated carbon blacks may be obtained by manufacturing carbon black in the presence of volatizable silicon-containing compounds. Such carbon blacks may be produced in a modular or "staged" furnace carbon black reactor having a combustion zone followed by a zone of converging diameter, a feed stock injection zone with restricted diameter, and a reaction zone. A quench zone is located downstream of the reaction zone. Typically, a quenching fluid, generally water, is sprayed into the stream of newly formed carbon black particles flowing from the reaction zone. In producing silicon-treated carbon black, the previously mentioned volatizable silicon-containing compound is introduced into the carbon black reactor at a point upstream of the quench zone. Useful compounds are volatizable compounds at carbon black reactor temperatures. Examples include, but are not limited to, silicates such as tetraethoxy orthosilicate (TEDS) and tetramethoxy orthosilicate, silanes such as tetrachloro silane, and trichloro methylsilane; and silicone polymers such as octamethylcyclotetrasiloxane (OMTS). The flow rate of the volatilizable compound will determine the weight percent of silicon in the treated carbon black. The weight percent of silicon in the treated carbon black typically ranges from 0.1 percent to 25 percent, e.g., 0.5 percent to 10 percent, and 2 percent to 6 percent. The volatizable compound may be pre-mixed with the carbon black-forming feed stock and introduced with the feed stock into the reaction zone. Alternatively, the volatizable compound may be introduced to the reaction zone separately, either upstream or downstream from the feed stock injection point.

As noted above, additives may be used, and in this regard coupling agents useful for coupling silica or carbon black should be expected to be useful with the silicon-treated carbon blacks. Carbon blacks and numerous additional suitable particulate fillers are commercially available and are known to those skilled in the art.

Selection of the particulate filler or mixture of particulate fillers will depend largely upon the intended use of the elastomer composite blends. As used herein, particulate filler can include any material which can be slurried and fed to the mixing zone in accordance with the principles disclosed here. Suitable particulate fillers include, for example, conductive fillers, reinforcing fillers, fillers comprising short fibers (typically having an LID aspect ratio less than 40), flakes, etc. In addition to the carbon black and silica-type fillers mentioned above, fillers can be formed of clay, glass, polymer, such as aramid fiber, etc. It will be within the ability of those skilled in the art to select suitable particulate fillers for use in the method and apparatus disclosed here given the benefit of the present disclosure, and it is expected that any filler suitable for use in elastomer compositions may be incorporated into the elastomer composites using the teachings of the present disclosure. Of course, blends of the various particulate fillers discussed herein may also be used.

It will be understood that carbon blacks having lower surface area per unit weight may be used in higher concentration in the particulate slurry to achieve the same coagulation efficacy as lower concentrations of carbon black having higher surface area per unit weight.

The masterbatch (or other elastomer composite) produced by the wet mixing step optionally undergoes any suitable further processing prior to addition of additional elastomer in the dry mixing step of the wet/dry method disclosed here. Suitable apparatus for the dry mixing step is commercially available and will be apparent to those skilled in the art given the benefit of this disclosure. Suitable dry mixing apparatus include, for example, Banbury mixers, mills, roller mixers, etc. The coagulum from the wet mixing step, with or without any further intermediate processing, is introduced into the Banbury mixer or other mixing device along with the additional elastomer in any suitable order and relative proportion suitable to the intended use or application. It will be within the ability of those skilled in the art, given the benefit of this disclosure to determine suitable order of addition and relative proportion for the wet mixing product and the additional elastomer. Likewise, it will be within the ability of those skilled in the art given the benefit of this disclosure to select suitable additional ingredients for addition during the dry mixing step suitable to the intended use or application, for example, extender oil, curatives, and other additives known for use in elastomer composites and elastomer composite blends of the general type disclosed here.

## Claims

1. A system for producing a masterbatch comprising:
a coagulation chamber (5) comprising a first inlet and a second inlet;
an elastomeric latex source in fluid communication with the first inlet;
a sonication chamber (4) in direct fluid communication with the second inlet and/or a sonication device for facilitating ultrasonic mixing within the coagulation chamber (5); and
a particulate slurry source configured to provide a particulate slurry to the sonication chamber (4).

2. The system of claim 1, wherein the particulate slurry source comprises a carbon black slurry tank (6).

3. The system of claim 1 or 2, further comprising a relatively high shear mixer (3) between the particulate slurry source or the carbon black slurry tank (6) and the sonication chamber (4).

4. The system of claim 1, 2 or 3, further comprising a pump (2), preferably a positive displacement pump, between the particulate slurry source or the carbon black slurry tank (6) and the sonication chamber (4).

5. A method for producing a masterbatch, the method comprising:
feeding a first composition comprising an elastomeric latex to a coagulation chamber (5); and
feeding a second composition comprising a particulate filler;
wherein the first composition and the second composition are mixed in the coagulation chamber (5) to form the masterbatch; and
wherein the second composition is fed from a sonication chamber (4) to the coagulation chamber (5) and/or wherein an ultrasonic generator facilitates ultrasonic mixing within the coagulation chamber (5).

6. The method of claim 5, wherein the particulate filler comprises carbon black and/or wherein the elastomeric latex comprises natural rubber.

7. The method of claim 5 or 6, wherein the second composition is fed to the coagulation chamber (5) at a pressure of at least 2068 kPa or at a pressure in a range of from 3447 kPa to 34474 kPa.

8. The method of claim 5, 6 or 7, wherein the second composition is fed to the coagulation chamber (5) at a velocity of at least 30.48 meter per second, preferably in a range of from 30.48 meter per second to 244 meter per second.

9. The method of at least one of the claims 5 to 8, wherein the first composition is fed to the coagulation chamber (5) continuously and/or wherein the second composition is fed to the coagulation chamber (5) continuously.

10. A method for producing an elastomeric composite blend, the method comprising:
feeding a first composition comprising an elastomeric latex to a coagulation chamber (5); and
feeding a second composition comprising a particulate filler to the coagulation chamber (5), wherein the first composition and the second composition are mixed in the coagulation chamber (5) to form a masterbatch; and
dry mixing the masterbatch with an additional elastomer to form the elastomer composite blend;
wherein the second composition is fed to the coagulation chamber (5) from a sonication chamber (4) and/or wherein an ultrasonic generator facilitates ultrasonic mixing in the coagulation chamber (5).

11. The method of claim 11, wherein the additional elastomer comprises at least one material selected from the group consisting of natural rubber, chlorinated natural rubber, or a homopolymer, copolymer or terpolymer comprising one or more of 1,3-butadiene, styrene, isoprene, isobutylene, 2,3-dimethyl-1,3-butadiene, acrylonitrile, ethylene, and propylene.

12. The method of claim 10 or 11, wherein the particulate filler comprises carbon black.

13. The method of claim 10, 11 or 12, wherein the elastomeric latex comprises natural rubber.

14. The method of at least one of the claims 10 to 13, wherein the second composition is fed to the coagulation chamber (5) at a pressure of at least 2068 kPa or at a pressure in a range of from 3447 kPa to 34474 kPa.

15. The method of at least one of the claims 10 to 14, wherein the second composition is fed to the coagulation chamber (5) at a velocity of at least 30.48 meter per second, preferably in a range of from 30.48 meter per second to 244 meter per second.
